# EUROPEAN PATENT SPECIFICATION

(11) **EP 4 241 892 B1**
(45) Date of publication and mention of the grant of the patent: **10.06.2026**
(21) Application number: 23159911.9
(22) Date of filing: 03.03.2023
(51) Int. Cl.: B05B 1/32, B05B 1/20, B05B 3/04, B05B 1/16

(54) **OSCILLATING SPRINKLERS**
OSZILLIERENDE SPRINKLER
ARROSEURS OSCILLANTS

(30) Priority: 07.03.2022 GB 202203114
(43) Date of publication of application: 13.09.2023
(73) Proprietor: Exel Industries, 51200 Epernay (FR)
(72) Inventor: O'TOOLE, John, Birmingham, B76 1AB (GB); RICKUSS, Ian, Birmingham, B76 1AB (GB); IACIOFANO, Nicolino, Birmingham, B76 1AB (GB)
(74) Representative: Cleveland Scott York

(56) References cited:
- DE-A1- 3 942 086
- GB-A- 2 565 686
- US-A- 3 423 024

## Description

This invention relates to oscillating sprinklers and spray bars for oscillating sprinklers.

An oscillating sprinkler generally comprises a base, a spray bar mounted on the base for oscillating movement relative to the base and a drive unit for driving the oscillating movement of the spray bar relative to the base.

With this arrangement, a relatively large area of garden, typically a lawn, may be watered by suitably positioning the sprinkler in the area to be watered turning on the water and allowing the sprinkler to oscillate as water is delivered to the region of interest.

GB2565686A describes an oscillating sprinkler with an adjustable sprinkling area comprising a base, an oscillating gearbox and a sprinkling assembly. The ends of the sprinkling pipe are provided with water passage holes and adjusting sleeves are rotatably sleeved on the ends of the sprinkling pipe and enclose the water passage of covered holes.

In order to maximise the efficient use of water and/or to avoid watering areas where it is unnecessary or undesirable, it would be desirable to provide a sprinkler which is able to offer variable coverage in use.

According to a first aspect of the invention there is provided an oscillating sprinkler spray bar according to claim 1.

According to a second aspect of the invention there is provided an oscillating sprinkler according to claim 15.

The first and second aspects of the invention can allow provision of a sprinkler which is controllable in terms of the area which is selected to be watered by the sprinkler. In turn this can lead to a more efficient use of water and/or more accurate watering.

When the adjuster portion is in the second position, the adjuster portion may leave all of the plurality of outlet orifices open for the outlet of water.

The spray bar may comprise a tube portion on which the adjuster portion is mounted.

The adjuster portion may be mounted for rotational movement around an axis of the tube portion.

The first position may be a first rotational position relative to the tube portion and the second position may be a second rotational position relative to the tube portion.

The adjuster portion may be held against axial movement relative to the tube portion. This can assist a user in using the device by ensuring appropriate axial alignment is maintained between the adjuster portion and the at least one outlet orifice which the adjuster portion is arranged to selectively obscure. The spray bar may comprise two stop portions to resist axial movement of the adjuster portion.

The adjuster portion may comprise a sleeve portion provided around the tube portion.

The sleeve portion may be irremovable retained on the tube portion. By this it is meant that in normal use, without disassembling or breaking part of the sprinkler, the sleeve cannot be removed from the tube portion. This can help ensure that adjuster portion is not lost or mislaid.

The sleeve portion may completely encircle the tube portion. The sleeve portion may be in the form of a continuous, unbroken, loop around the tube portion.

The spray bar may be bent along its length so as to have at least a portion with an arcuate shape. This can help provide a desirable sprinkler spray pattern - tending to help to spread the coverage from adjacent outlet orifice without needing complexity in the outlet orifices themselves.

The spray bar comprises a plurality of tube portions which are joined together longitudinally end to end.

The spray bar comprises a metallic tube portion and at least one plastics material tube portion, the metallic tube portion defining at least one of the plurality of outlet orifices, the at least one plastics material tube portion defining at least one of the plurality of outlet orifices, and an end of the metallic tube portion being joined to an end of the plastics material tube portion such that there is a fluid communication path between an interior of the metallic tube portion and an interior of the plastics material tube portion.

The provision of such a "hybrid" structure spray bar can provide advantages since the metallic tube portion is cost effective, robust and can be conveniently bent into a desired shape whereas the plastics material tube portion can provide a part which easier to manufacture to accurate tolerances and is less likely to be deformed in transit or use.

Where there is a "hybrid" structure spray bar, the at least one adjuster portion is preferably mounted on the at least one plastics material tube portion.

This can facilitate more effective sealing between the adjuster portion and the plastics material tube portion than could be easily achieved between the metallic tube portion and an adjuster portion mounted thereon. This in turn is because the "roundness" (or more generally accuracy of the shape) of the plastics material tube portion is easier to be sure of than that of the metallic tube portion. During manufacture, shipping, use and so on, a metallic spray tube portion is liable to be deformed to some degree. The amount of deformation may be small in everyday terms, but it has been determined that it can be enough to make sealing against such a metallic tube portion problematic which in turn can give an increased risk of leaks.

The metallic tube portion may be mounted to the plastics material tube portion by virtue of having an end portion which is received in a bore of the plastics material tube portion and the provision of a seal and a locking ring which surround and secure the metallic tube portion. The locking ring may have a thread that engages with a corresponding thread on the plastics material tube portion and the seal may be forced into gripping engagement with the metallic tube portion by virtue of the locking ring being tightened onto the plastics material tube portion.

The locking ring may also be arranged to restrict axial movement of the at least one adjuster portion. The locking ring may act as one stop portion.

The metallic tube portion may be of Aluminium, in particular a length of hollow Aluminium tube.

The plastics material tube portion may be of injection moulded plastics material - say ABS. The at least one adjuster portion may be of plastics material and may, for example, be of injection moulded plastics material - say ABS.

Preferably the spray bar comprises a central metallic tube portion and a pair of plastics material tube portions, a first of the plastics material tube portions being provided at a first end of the metallic tube portion and a second of the plastics material tube portions being provided at a second end of the metallic tube portion.

In such a case the spray bar may comprise at least two adjuster portions with at least one adjuster portion mounted on the first of the plastics material tube portions and at least one adjuster portion mounted on the second of the plastics material tube portions.

The metallic tube portion may have an arcuate shape. The or each plastics material tube portion may have an elbow shape.

The central metallic tube portion may be mounted to the first and second of the plastics material tube portions via respective end portions, seals and locking rings.

A respective O-ring seal may be provided for sealing around each orifice, which is to be selectively obscured, between the tube portion and adjuster portion when the orifice is obscured by the adjuster portion.

A respective seal seat may be provided in the tube portion around each orifice, which is to be selectively obscured, and a respective O-ring seal may be provided in each seat.

When the adjuster is in the first position, the O-ring seal may seal between the tube portion and the adjuster portion against the egress of water from the respective orifice.

The adjuster may define an outlet aperture which is aligned with the respective orifice when the adjuster is in the second position.

The O-ring seal may be arranged to seal around the periphery of the outlet aperture when the adjuster is in the second position.

The spray bar may comprise indicator means for indicating to a user when the adjuster is in the first position and/or when the adjuster is in the second position. More specifically, the spray bar can be arranged so that the adjuster clicks into position in the first position and/or clicks into position in the second position.

In one set of embodiments, the indicator means comprises at least one projection provided on one of the inner curved surface of the adjuster portion and the outer curved surface of the tube portion and at least one trough provided on the other of the inner curved surface of the adjuster portion and the outer curved surface of the tube portion and arranged to receive the projection when the adjuster portion is in a selected rotational position relative to the tube.

The selected rotational position may correspond to the first position or the second position as introduced above.

Where the indicator means is arranged to indicate when the adjuster is in the first position and when the adjuster is in the second position, the indicator means may comprise:
two projections and one trough, wherein a first of the projections engages with the trough in the first position and a second of the projections engages with the trough in the second position; or
two troughs and one projection, wherein a first of the troughs engages with the projection in the first position and a second of the troughs engages with the projection in the second position.

In one set of embodiments, the indicator means comprises two troughs provided on the outer curved surface of the tube portion and one projection provided on the inner curved surface of the adjuster portion.

Preferably at least two adjuster portions are provided. Preferably one adjuster portion is provided towards a first end of the spray bar and one adjuster portion is provided towards a second end of the spray bar, with a central region of the spray bar provided therebetween.

More preferably at least four adjuster portions are provided with two adjuster portions provided towards a first end of the spray bar and two adjuster portions provided towards a second end of the spray bar, with a central region of the spray bar provided therebetween.

Where two or more adjuster portions are provided adjacent one another in a row, a first stop portion may be provided at one end of the row and a second stop portion may be provided at the other end of the row to resist axial movement of the adjuster portions.

In one set of embodiments, the spray bar comprises a central metallic tube portion and a pair of plastics material tube portions, a first of the plastics material tube portions being provided at a first end of the metallic tube portion and a second of the plastics material tube portions being provided at a second end of the metallic tube portion and the spray bar further comprising at least two adjuster portions, a first provided on the first plastics material tube portion, and a second provided on the first plastics material tube portion.

Preferably at least two adjuster portions are provided on each of the plastics material tube portions.

The drive unit may comprise a water powered motor, which may comprise a turbine arranged to be driven by a flow of water into the sprinkler and may comprise a gearbox for gearing down the rotational drive provided by the turbine in use to drive the oscillating movement of the spray bar.

The water powered motor may comprise a flow switching arrangement for repeatedly switching a direction of delivery of water to the turbine to alternately drive the turbine in a clockwise sense and an anti-clockwise sense so causing oscillating driving of the spray bar in use.

Note that, in general terms and with any necessary modifications in wording, all of the further features defined above following any aspect of the invention above are applicable as further features of all other aspects of the invention defined above. These further features are not restated after each aspect of the invention merely for the sake of brevity.

Embodiments of the present invention will now be described, by way of example only, with reference to the accompanying drawings in which:
Figure 1 schematically shows an oscillating garden sprinkler;
Figure 2 is a sectional view of a spray bar of the oscillating garden sprinkler shown in Figure 1;
Figure 3 is a partially cut away view of part of the spray bar shown in Figure 2;
Figure 4A shows a section of the spray bar shown in Figure 3 taken on line IVA;
Figure 4B shows a section of the spray bar shown in Figure 3 taken on line IVB;
Figure 5 is a sectional view of a drive unit of the oscillating garden sprinkler show in Figure 1;
Figure 6A is sectional view of the drive unit shown in Figure 5 with a flow switching arrangement in a first position; and
Figure 6B is a sectional view of the drive unit shown in Figures 5 and 6A with the switching arrangement in second position.

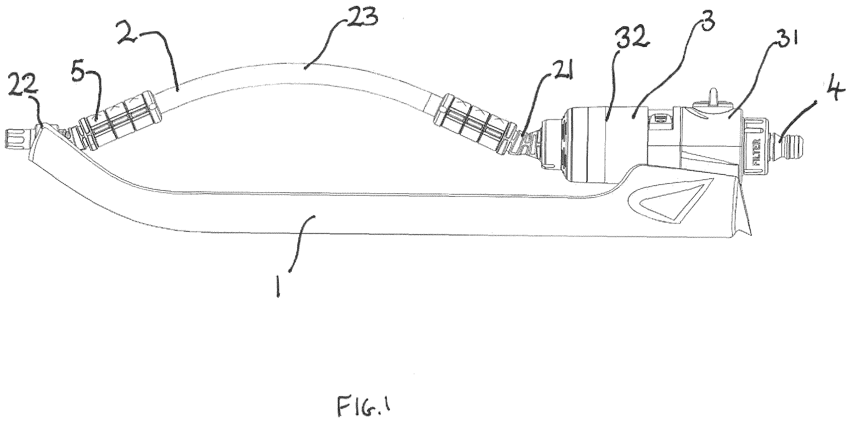

Figure 1 schematically shows an oscillating garden sprinkler which is arranged to be connected to a garden hose for watering an extended area such as a lawn.

The sprinkler comprises a base or sled 1 on which is mounted a spray bar 2 for oscillating movement relative to the base 1 and a drive unit 3 for driving the oscillating movement of the spray bar 2.

An inlet 4 into the drive unit is provided. In this embodiment, the inlet 4 is arranged to allow the connection of a hose using a standard push fit hose connector and thus the inlet 4 comprises a male push fit hose fitting. In other embodiments different forms of inlet connector may be provided and indeed a hose may be more permanently mounted to the sprinkler.

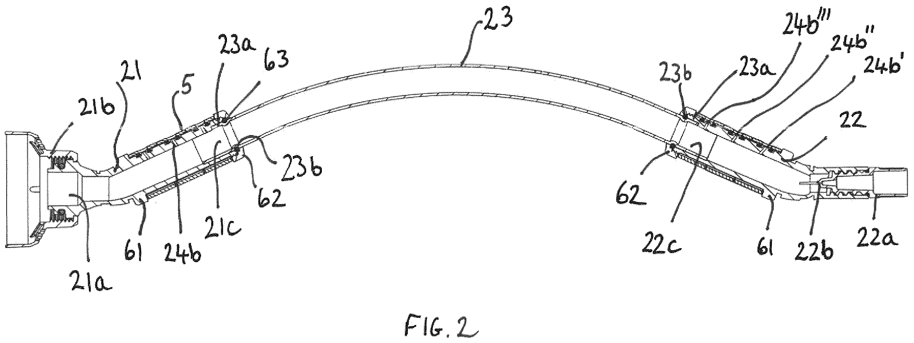

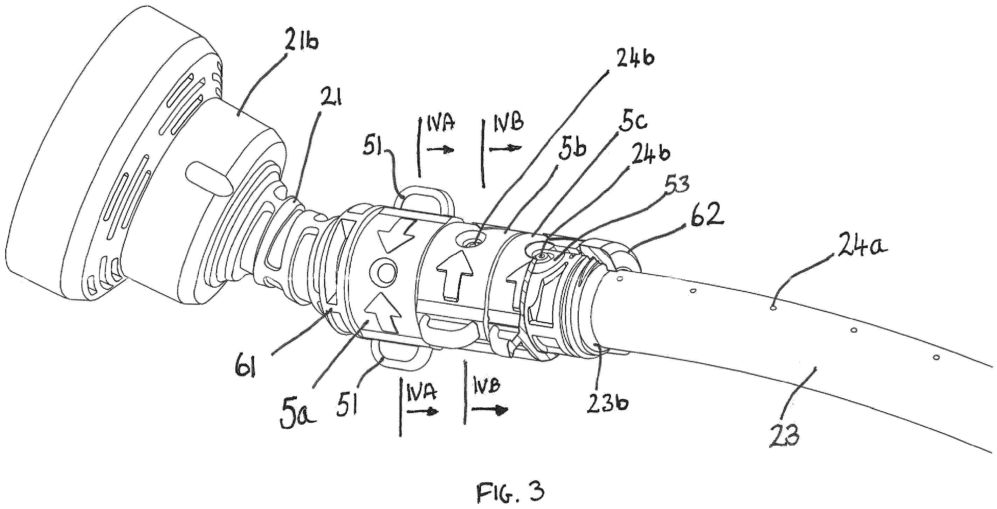

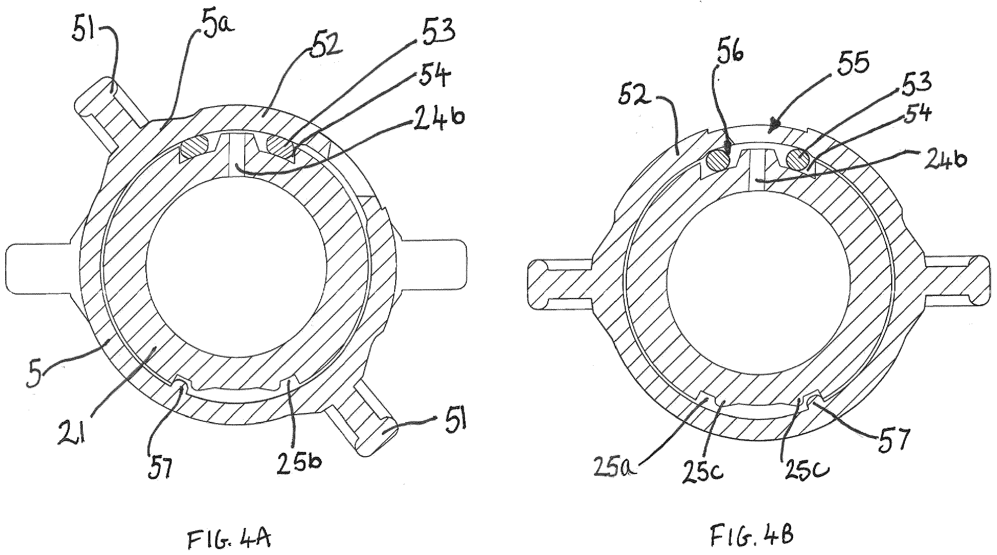

Various aspects of the spray bar 2 are shown in more detail in Figures 2, 3,4A and 4B. Figure 2 shows the spray bar 2 alone when demounted from the remainder of the sprinkler and shows the spray bar in section. Figure 3 shows in more detail one end of the spray bar 2, this being the end which is mounted to the drive unit 3. Figures 4A and 4B show sections through the spray bar 2 which will be described in more detail further below.

Referring now to Figures 1, 2 and 3, the spray bar 2 comprises three portions. A first elbow tube portion 21 which is mounted to the drive unit 3, a second elbow tube portion 22 which is mounted to the base 1 at a location spaced from the drive unit 3 and a central tube portion 23 provided between the elbow portions 21 and 22. In the present embodiment the first elbow portion 21 and second elbow portion 22 are of plastics material and in particular are of injection moulded plastics material say, for example, ABS. On the other hand, the central tube portion 23 in the present embodiment is a metallic tube portion say, an aluminium tube portion. The central tube portion 23 is bent along its length into an arcuate shape so that overall the spray bar 2 has a generally arcuate shape.

As can be seen in Figure 2, each of the tube portions 21, 22, 23 are hollow and the interior of the tube portions 21, 22, 23 are in fluid communication with one another and in fluid communication with the inlet 4 into the sprinkler as a whole. The spray bar 2 has an inlet 21a. In this embodiment the inlet 21a is provided in the first elbow tube portion 21.

As best seen in Figure 3 the spray bar 2 comprises a plurality of orifices 24a, 24b which are provided for allowing water out of the spray bar 2 for watering of the desired area when the sprinkler is in operation.

A first series of outlet orifices 24a is provided in the central portion 23 of the spray bar 2 whereas second and third series of orifices 24b are provided respectively in the first elbow tube portion 21 and second elbow tube portion 22. Some of this second series of outlet orifices 24b can be seen in Figure 3 whereas both the second and third series of outlet orifices 24b can be seen in Figure 2. The first set of outlet orifices 24a provided in the central tube portion 23 can be seen in Figure 3 but are not visible in Figure 2.

The second elbow tube portion 22 is provided with a plug portion 22a which fits in the end of the elbow tube portion 22 in normal use stopping flow out the end of the second elbow tube portion 22. However for flushing through or otherwise cleaning of the spray bar 2, the plug portion 22a may be removed from the end of the second elbow tube portion 22. Further, a cleaning needle portion 22b is provided on the plug 22a which may be used by a user for cleaning one or more of the orifices 24a, 24b should these become blocked.

The first elbow tube portion 21 is provided with a nut portion 21b via which the spray bar 2 is threadingly engaged with the drive unit 3.

In basic operation of the sprinkler a water supply is connected to the inlet 4, water flows through the drive unit 3 which drives oscillating movement of the spray bar 2, and water leaves the spray bar 2 via the outlet orifices 24a, 24b in order to water an area of interest. As this occurs, water flows into the inlet 21a of the spray bar 2 and through the interior of the elbow tube portions 21, 22 and central tube portion 23.

The overall curved shape of the spray bar helps distribute water over an area to be watered more widely by virtue leading to the outlet orifices 24a in the central tube portion 23 being orientated so as to emit water in jets which are flared away from one another.

In the case of the outlet orifices 24b provided in the first elbow tube portion 21 and second elbow tube portion 22 then in some instances, as in the present embodiment, the outlet orifices 24b may be arranged at an angle relative to one another and/or at an angle relative to a perpendicular to the axis of the elbow tube portion 21, 22. This again can help flare the spray pattern created by the sprinkler outwards to cover a larger area. If one considers Figure 2, it can be seen that the outlet orifices 24b in each elbow tube portion 21, 22 are flared in an outward pointing direction away from the perpendicular of the axis of the tube portion 21,22 at the point where they are located. Furthermore the angle which each outlet orifice 24b creates with its respective perpendicular increases as one progress along the tube 21, 22 towards its respective end. Thus the distalmost outlet orifice 24b' is flared outwards further away from its perpendicular then the next most second most distal outlet 24b" which in turn is flared outwardly further relatively to its perpendicular than the next most distal outlet 24b‴ and so on.

In the present embodiment the outlet orifices 24a provided in the central tube portion 23 are always open. That is to say in normal use when water is fed into the sprinkler the water will always leave via these orifices 24a provided there is sufficient pressure in the water supply. On the other hand, in the present embodiment, the second and third series of orifices 24b provided in the first elbow tube portion 21 and second elbow tube portion 22 are controllable. That is to say the user may open and close these orifices 24b as desired in order to control the overall area which is watered by the sprinkler in use.

Referring still to Figures 1, 2 and 3, each orifice 24b in the second and third series of orifices is provided with a respective adjuster collar 5 which is movable between a first position in which the adjuster collar 5 obscures its respective orifice 24b and a second position in which the adjuster collar 5 leaves its respective orifice 24b unobstructed. In Figure 3, three adjuster collars 5a, 5b, 5c can be seen. The first adjuster collar 5a is shown in its first position such that it seals its respective orifice 24b (not visible in Figure 3) whereas the second and third adjuster collars 5b, 5c are shown in their respective second positions such that their respective orifices 24b are open.

Each adjuster collar 5 in the present embodiment is ring-like and completely surrounds the respective tube portion 21, 22 on which it is located. Furthermore, each adjuster collar 5 is held against the axial movement relative to the tube portion 21, 22 on which it is mounted. This means that the adjuster collars 5, whilst be rotationally moveable between the first and second positions for opening and closing their respective orifice 24b, are held against removal from the spray bar 2 and held against axial movement relative to the remainder of the spray bar 2. In turn this means that the risk of losing the adjuster collars 5 is substantially removed and it becomes much easier for the user to successfully open and close the respective orifices 24b since axial alignment between the adjuster collar 5 and the respective orifice 24b is assured. Each of the adjuster collars 5 comprises a pair of projecting grip portions 51 to assist a user in gripping the adjuster collar 5 when moving between the first and second positions.

In the present embodiment the row of three adjuster collars 5 are held in their relative axial position by virtue of two stop portions 61, 62. A first of the stop portions is provided as a flange 61 on the respective tube portion 21, 22 and the second stop portion 62 is provided in the form of a locking ring 62 which is used in locking the central tube portion 23 to the respective elbow tube portion 21, 22.

The central tube portion 23 has respective end portions 23a (see Figure 2) which project into a bore 21c, 22c provided in the respective elbow portion 21, 22 and are locked into position to the respective elbow portion 21, 22 by virtue of the respective locking ring 62 and squeezing a respective O-ring 63 into gripping contact with the respective end portion of the tube 23a. Each locking ring 62 is threadingly engaged onto the respective elbow portion 21, 22. In the present embodiment, a locating recess 23b is provided in the outer wall of the central tube 23 at the respective end portions 23a for housing the sealing O-ring 63.

As most clearly in seen in Figure 4A when the adjuster collar 5 is in the first position relative to the respective tube portion 21 a side wall portion 52 of the adjuster collar 5 faces the respective orifice 24b. However just opposing a side wall portion 52 of the collar to the exit of the orifice 24b is likely to be insufficient to effectively stop water leaking out of the orifice 24. Thus, in the present embodiment a respective O-ring 53 is provided around each orifice 24b in the second and third series of orifices. That is to say each orifice 24b provided in one of the two plastic material tube portions 21, 22 is surrounded by a respective O-ring 53. Each O-ring 53 is provided in a respective O-ring seat 54 in the form of a ring-like recess in the outer curved surface of the respective tube portion 21, 22. Thus as can be seen in Figure 4A when the adjuster collar 5 is in the first position, the seal 53 is squeezed into contact between its seat 54 on the one hand and the respective wall portion 52 of the adjuster collar 5 on the other hand so forming a seal around the orifice 24b to resist egress of water.

On the other hand, when the respective adjuster collar 5 is moved to its second position so that the orifice 24b is not obscured, as shown in Figure 4B, this aligns a respective aperture 55 provided in the adjuster collar 5 with the respective outlet orifice 24b. In this circumstance, in the present embodiment the respective O-ring 53 is still retained in its seat 54 via a respective portion of the side wall 52 of the collar 5. This can be assured by selecting the dimensions, for example the diameter, of the aperture 55 to be smaller than at least the outer diameter of the O of the O-ring 53 and preferably smaller than the inner diameter of the O of the O-ring 53 so as to provide protection to the O-ring 53.

Furthermore, in this embodiment the side wall 52 in the region of the aperture 55 is provided with an appropriate recess 56 such that when the aperture 55 is aligned with the respective orifice 24b, the O-ring 53 rests in this recess 56 and thus may exist in a non-deformed state or at least a less deformed state when the adjuster collar 5 is in the second position as shown in Figure 4B than when in the first position shown in Figure 4A.

It will be appreciated that in this second position there is less requirement for sealing between the O-ring 53 and the outer wall portion 52 than there is in the first position. Further, allowing the O-ring 53 to be at rest when the adjuster collar 5 is in the second position can help prolong the life of the O-ring 53.

Note that in normal operation as mentioned above, the adjuster collars 5 are irremovably mounted on the spray bar 2. However, it is possible to remove them for maintenance and for example, for replacing the O-rings 53 provided around each orifice 24b by dissembling the spray bar 2, in particular by loosening the locking ring 62, removing the central portion 23 of the spray bar from the respective elbow portion 21,22 and sliding the adjuster collars 5 off of the respective elbow portion 21, 22.

The spray bar 2 comprises indicator means for indicating whether each adjuster collar 5 is in its respective first position or respective second position. At a first level this may be observable by seeing whether the orifice 24b is visible through the respective aperture 55. However, a more positive indicator means is provided in the present embodiment. Further, in the present embodiment these features help to index the respective adjuster collar 5 into its first position and into to its second position. In the present embodiment, the adjuster collars 5 click into both their respective first position and their respective second position. In the present embodiment this is achieved by the provision of a projection 57 provided on the inner curved side wall of the adjuster collar 5 and a pair of respective first and second troughs 25a, 25b provided on the outer curved side wall of the respective elbow portions 21, 22. When the adjuster collar 5 is in the first position as shown in Figure 4A, the projection 57 engages with the first trough 25a whereas when the adjuster collar 5 is in the second position as shown in Figure 4B, the projection 57 engages with the second trough 25b.

Furthermore, in the present embodiment the first trough 25a is shaped so as to resist movement of the adjuster collar 5 from the first position shown in Figure 4A to a position further away from the second position - which might be described as being moved in "the wrong direction". Furthermore, the second trough 25b is shaped so as to resist movement of the adjuster collar 5 in a direction further away from the first position when starting from the second position; again resisting what might be described as rotation of the collar in "the wrong direction".

On the other hand, respective camming surfaces 25c are provided on the entrance into the troughs 25a, 25b over which the projection 57 will pass when moving from the first position towards the second position and when moving from the second position towards the first position. These camming surfaces 25c are chosen to provide a notable click into the first position and into the second position and a modicum of resistance when moving out of the first position towards the second position and when moving out of the second position towards the first position.

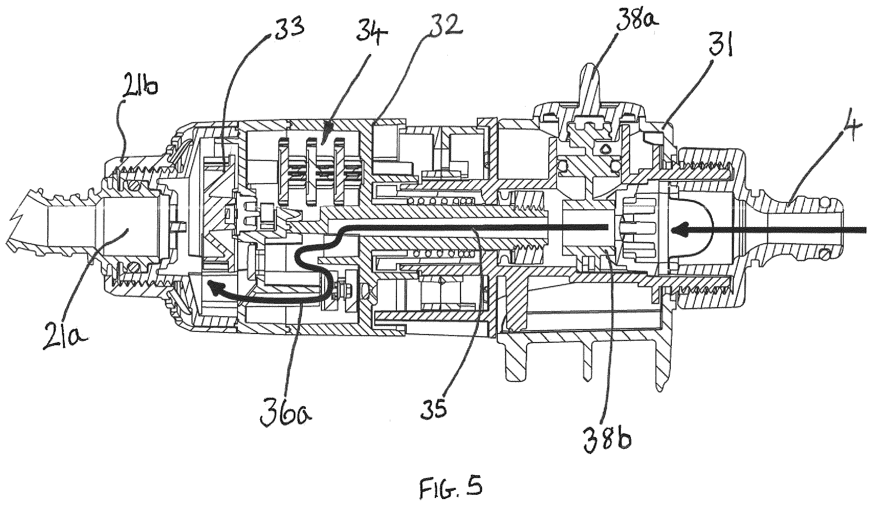

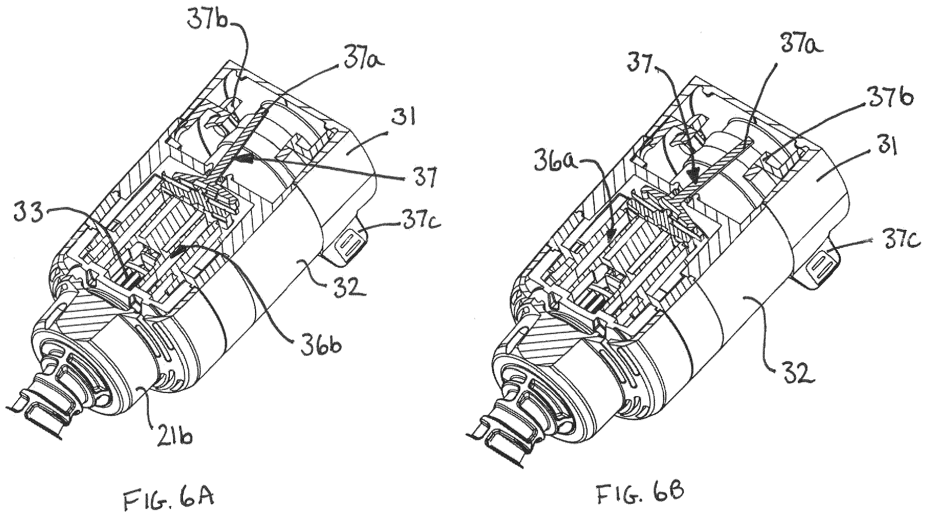

The drive unit 3 used in the sprinkler is not of primary interest in the present application and any suitable type of oscillating sprinkler drive unit might be used with the spray bar of the present application. However, for completeness, Figures 5, 6A and 6B show the drive unit of the present embodiment and this is described below.

The drive unit has a static portion 31 which is mounted to the base 1 and rotating portion 32 which rotates in an oscillating fashion relative to the static portion 31. The spray bar 2 is mounted to the rotating portion 32 via the nut 21b as mentioned above and as shown in Figure 5. The rotating portion 32 houses a turbine 33 which is arranged to be driven by a flow of water through the drive unit from the inlet 4 of the sprinkler into the inlet 21a of the spray bar 2. Rotation of the turbine 33 is geared down by a gearbox 34 which in turn drives the rotation of the rotating portion 32 of the drive unit relative to the static portion 31. Oscillating drive is achieved because a feed direction of water to the turbine 33 is alternately reversed. The bold arrow in Figure 5 shows the flow path of water into the turbine 31 in a first direction. This flow path has a common portion 35 through the majority of the drive unit 3 and then a dedicated portion 36a which is a flow channel feeding water to one side of the turbine 33 which is only used in a first flow direction.

Figures 6A and 6B are sectional views of an underside portion of part of the drive unit 3 which show this first dedicated flow channel 36a which is indicated in Figure 6B and a second corresponding dedicated flow channel 36b which is indicated in Figure 6A. The second dedicated flow channel 36b is for feeding water to an opposite side of the turbine 33.

Whether the common flow path 35 is connected to the first dedicated flow channel 36a or the second dedicated flow channel 36b is controlled by a switching arrangement 37 which can be seen in Figures 6A and 6B. In Figure 6A the first dedicated flow channel 36a is shown blocked off by the switching arrangement 37 whilst entrance into the second dedicated flow channel 36b is open. On the other hand, in Figure 6B, entrance into the first flow channel 36a is open whereas entrance into the second dedicated flow channel 36b is closed.

The switching arrangement 37 comprises a lever arm portion 37a and a pair of adjustable switching direction members 37b.

The flow switching arrangement 37 is changed from the position shown in Figure 6A to the position shown in Figure 6B when, due to the rotation of the rotating portion 32 of the drive unit 3 relative to the static portion 31, the lever arm portion 37a makes contact with one of the adjustable switching direction members 37b.

As an example, in the orientation shown in Figure 6A, as the rotating portion 32 rotates to the left, the lever arm portion 37a will move to the left until it impacts on the left-hand switching direction member 37b. This will then flip the lever arm 37a over to the position shown in Figure 6B so closing the second dedicated flow channel 36b and opening the first dedicated flow channel 36a. Once this has occurred, feed of water to the turbine 33 is reversed which in turn tends to slow the rotation of the turbine 33 down and then begins to drive the turbine 33 in the opposite direction. Through this means, reciprocating drive is achieved with the turbine 33 first of all driving the rotating portion 32 and hence the spray bar 2 in a first direction and then slowing this drive down as the feed of water to the turbine 33 is reversed and gradually changing the direction of rotation of the rotating portion 32 as the direction of the turbine 33 is reversed and then speeding up this rotation until the end of the range is reached and the flow switches in the opposition direction and so on.

In the present embodiment the oscillating range of the sprinkler may be adjusted by moving the switching direction members 37b using respective finger tabs 37c. Moreover the rate of flow of water through the whole unit may be adjusted using a flow control knob 38a which operates a corresponding valve 38b.

Overall, a device is achieved where a high degree of variation in watering pattern and coverage may be achieved by use of the collar adjusters 5 to open a selected number of the orifices 24b in the spray bar and also optionally by making use of the controls on the drive unit 3 when these are provided such as is the case in the present embodiment.

## Claims

1. An oscillating sprinkler spray bar for use in an oscillating sprinkler which comprises a base (1) on which the spray bar (2) is mountable for oscillating movement and a drive unit for driving oscillating movement of the spray bar (2) relative to the base (1), the spray bar (2) comprising an inlet (4) for receiving water, a plurality of outlet orifices (24a, 24b) and carrying an adjuster portion (5) which is moveable between a first position in which the adjuster portion (5) obscures at least one of the outlet orifices (24a, 24b) against the outlet of water and a second position in which the adjuster portion (5) leaves said at least one of the outlet orifices (24a, 24b) open for the outlet of water, in which the spray bar (2) comprises a plurality of tube portions (21, 22, 23) which are joined together longitudinally end to end, wherein the spray bar (2) comprises a metallic tube portion (23) and at least one plastics material tube portion (21, 22), the metallic tube portion defining at least one of the plurality of outlet orifices, the at least one plastics material tube portion defining at least one of the plurality of outlet orifices, and an end of the metallic tube portion being joined to an end of the plastics material tube portion such that there is a fluid communication path between an interior of the metallic tube portion and an interior of the plastics material tube portion.

2. An oscillating sprinkler spray bar according to claim 1 in which the at least one adjuster portion (5) is mounted on the at least one plastics material tube portion (21, 22).

3. An oscillating sprinkler spray bar according to claim 1 or 2 in which the spray bar (2) comprises a central metallic tube portion (23) and a pair of plastics material tube portions (21, 22), a first of the plastics material tube portions being provided at a first end of the metallic tube portion and a second of the plastics material tube portions being provided at a second end of the metallic tube portion.

4. An oscillating sprinkler spray bar according to claim 3 in which the spray bar (2) comprises at least two adjuster portions (5) with at least one adjuster portion mounted on the first of the plastics material tube portions and at least one adjuster portion mounted on the second of the plastics material tube portions.

5. An oscillating sprinkler spray bar according to any preceding claim in which the spray bar (2) comprises a tube portion (21, 22) on which the adjuster portion (5) is mounted for rotational movement around an axis of the tube portion.

6. An oscillating sprinkler spray bar according to claim 5 in which the adjuster portion (5) is held against axial movement relative to the tube portion (21, 22).

7. An oscillating sprinkler spray bar according to claim 5 or claim 6 in which the adjuster portion (5) comprises a sleeve portion provided around the tube portion (21, 22), optionally wherein the sleeve portion is irremovable retained on the tube portion.

8. An oscillating sprinkler spray bar according to any preceding claim in which a respective O-ring seal (53) is provided for sealing around each orifice (24a, 24b), which is to be selectively obscured, between the tube portion (21, 22) and adjuster portion (5) when the orifice is obscured by the adjuster portion, wherein optionally a respective seal seat (54) is provided in the tube portion around each orifice, which is to be selectively obscured, and a respective O-ring seal is provided in each seat.

9. An oscillating sprinkler spray bar according to any preceding claim in which the adjuster (5) defines an outlet aperture which is aligned with the respective orifice (24a, 24b) when the adjuster is in the second position.

10. An oscillating sprinkler spray bar according to any preceding claim in which the spray bar (2) comprises indicator means for indicating to a user when the adjuster is in the first position and/or when the adjuster is in the second position, the indicator means being such that the adjuster clicks into position in the first position and/or clicks into position in the second position.

11. An oscillating sprinkler spray bar according to claim 10 in which the indicator means comprises at least one projection (57) provided on one of the inner curved surface of the adjuster portion and the outer curved surface of the tube portion and at least one trough (25a, 25b) provided on the other of the inner curved surface of the adjuster portion and the outer curved surface of the tube portion and arranged to receive the projection when the adjuster portion is in a selected rotational position relative to the tube.

12. An oscillating sprinkler spray bar according to claim 10 or claim 11 wherein the indicator means is arranged to indicate when the adjuster (5) is in the first position and when the adjuster is in the second position, and the indicator means comprises:
two projections (57) and one trough (25a, 25b), wherein a first of the projections engages with the trough in the first position and a second of the projections engages with the trough in the second position; or
two troughs (25a, 25b) and one projection (57), wherein a first of the troughs engages with the projection in the first position and a second of the troughs engages with the projection in the second position.

13. An oscillating sprinkler spray bar according to any preceding claim in which at least two adjuster portions (5) are provided and one adjuster portion is provided towards a first end of the spray bar and one adjuster portion is provided towards a second end of the spray bar, with a central region of the spray bar provided therebetween.

14. An oscillating sprinkler spray bar according to claim 13 in which the spray bar comprises a central metallic tube portion (23) and a pair of plastics material tube portions (21, 22), a first of the plastics material tube portions being provided at a first end of the metallic tube portion and a second of the plastics material tube portions being provided at a second end of the metallic tube portion and the spray bar further comprising at least two adjuster portions (5), a first provided on the first plastics material tube portion, and a second provided on the first plastics material tube portion.

15. An oscillating sprinkler comprising a base (1), a spray bar (2) according to any preceding claim, mounted on the base (1) for oscillating movement relative to the base and a drive unit (3) for driving the oscillating movement of the spray bar relative to the base.

## Patentansprüche

1. Sprühstab für einen oszillierenden Regner zur Verwendung bei einem oszillierenden Regner, der einen Fuß (1), an dem sich der Sprühstab (2) für eine oszillierende Bewegung anbringen lässt, und eine Antriebseinheit zum Antreiben der osziliierenden Bewegung des Sprühstabs (2) in Bezug auf den Fuß (1) umfasst, wobei der Sprühstab (2) einen Eintritt (4) zum Aufnehmen von Wasser und mehrere Austrittsöffnungen (24a, 24b) umfasst und einen Verstellabschnitt (5) trägt, der sich zwischen einer ersten Position, in der der Verstellabschnitt (5) mindestens eine der Austrittsöffnungen (24a, 24b) verdeckt und so ein Austreten von Wasser daraus verhindert, und einer zweiten Position, in der der Verstellabschnitt (5) die mindestens eine der Austrittsöffnungen (24a, 24b) offenlässt und so ein Austreten von Wasser daraus ermöglicht, verstellen lässt, wobei der Sprühstab (2) mehrere Rohrabschnitte (21, 22, 23) umfasst, die in Längsrichtung an ihrer Enden miteinander verbunden sind, wobei der Sprühstab (2) einen Metallrohrabschnitt (23) und mindestens einen Rohrabschnitt (21, 22) aus Kunststoffmaterial umfasst, wobei der Metallrohrabschnitt mindestens eine der mehreren Austrittsöffnungen definiert, der mindestens eine Rohrabschnitt aus Kunststoffmaterial mindestens eine der mehreren Austrittsöffnungen definiert und ein Ende des Metallrohrabschnitts so mit einem Ende des Rohrabschnitts aus Kunststoffmaterial verbunden ist, dass zwischen einem Innenraum des Metallrohrabschnitts und einem Innenraum des Rohrabschnitts aus Kunststoffmaterial ein Fluidverbindungsweg besteht.

2. Sprühstab für einen oszillierenden Regner nach Anspruch 1, wobei der mindestens eine Verstellabschnitt (5) an dem mindestens einen Rohrabschnitt (21, 22) aus Kunststoffmaterial befestigt ist.

3. Sprühstab für einen oszillierenden Regner nach Anspruch 1 oder 2, wobei der Sprühstab (2) einen mittleren Metallrohrabschnitt (23) und zwei Rohrabschnitte (21, 22) aus Kunststoffmaterial umfasst, wobei ein erster der Rohrabschnitte aus Kunststoffmaterial an einem ersten Ende des Metallrohrabschnitts und ein zweiter der Rohrabschnitte aus Kunststoffmaterial an einem zweiten Ende des Metallrohrabschnitts vorgesehen ist.

4. Sprühstab für einen oszillierenden Regner nach Anspruch 3, wobei der Sprühstab (2) mindestens zwei Verstellabschnitte (5) umfasst, wobei mindestens ein Verstellabschnitt an dem ersten der Rohrabschnitte aus Kunststoffmaterial und mindestens ein Verstellabschnitt an dem zweiten der Rohrabschnitte aus Kunststoffmaterial befestigt ist.

5. Sprühstab für einen oszillierenden Regner nach einem der vorhergehenden Ansprüche, wobei der Sprühstab (2) einen Rohrabschnitt (21, 22) umfasst, an dem der Verstellabschnitt (5) für eine Drehbewegung um eine Achse des Rohrabschnitts herum befestigt ist.

6. Sprühstab für einen oszillierenden Regner nach Anspruch 5, wobei der Verstellabschnitt (5) gegen eine axiale Bewegung in Bezug auf den Rohrabschnitt (21, 22) festgehalten wird.

7. Sprühstab für einen oszillierenden Regner nach Anspruch 5 oder 6, wobei der Verstellabschnitt (5) einen Muffenabschnitt umfasst, der um den Rohrabschnitt (21, 22) herum vorgesehen ist, wobei der Muffenabschnitt wahlweise nicht abnehmbar an dem Rohrabschnitt fixiert ist.

8. Sprühstab für einen oszillierenden Regner nach einem der vorhergehenden Ansprüche, wobei zwischen dem Rohrabschnitt (21, 22) und dem Verstellabschnitt (5) zum Abdichten um jede gezielt zu verdeckende Öffnung (24a, 24b) herum, wenn die Öffnung von dem Verstellabschnitt verdeckt wird, ein jeweiliger Dichtungsring (53) vorgesehen ist, wobei in dem Rohrabschnitt um jede gezielt zu verdeckende Öffnung herum wahlweise ein jeweiliger Dichtsitz (54) und in jedem Sitz ein Dichtungsring vorgesehen ist.

9. Sprühstab für einen oszillierenden Regner nach einem der vorhergehenden Ansprüche, wobei der Versteller (5) einen Austrittsdurchlass definiert, der auf die jeweilige Öffnung (24a, 24b) ausgerichtet ist, wenn sich der Versteller in der zweiten Position befindet.

10. Sprühstab für einen oszillierenden Regner nach einem der vorhergehenden Ansprüche, wobei der Sprühstab (2) ein Anzeigemittel umfasst, das einem Benutzer anzeigt, wenn sich der Versteller in der ersten und/oder in der zweiten Position befindet, wobei das Anzeigemittel so gestaltet ist, dass der Versteller in der ersten Position und/oder in der zweiten Position einrastet.

11. Sprühstab für einen oszillierenden Regner nach Anspruch 10, wobei das Anzeigemittel mindestens einen Vorsprung (57), der an der gekrümmten Innenfläche des Verstellabschnitts oder der gekrümmten Außenfläche des Rohrabschnitts vorgesehen ist, und mindestens eine Vertiefung (25a, 25b) umfasst, die an der jeweils anderen aus der gekrümmten Innenfläche des Verstellabschnitts und der gekrümmten Außenfläche des Rohrabschnitts vorgesehen und so angeordnet ist, dass sie den Vorsprung aufnimmt, wenn sich der Verstellabschnitt in einer ausgewählten Drehposition in Bezug auf das Rohr befindet.

12. Sprühstab für einen oszillierenden Regner nach Anspruch 10 oder 11, wobei das Anzeigemittel so angeordnet ist, dass es anzeigt, wenn sich der Versteller (5) in der ersten und in der zweiten Position befindet, und das Anzeigemittel Folgendes umfasst:
zwei Vorsprünge (57) und eine Vertiefung (25a, 25b), wobei ein erster der Vorsprünge in der ersten Position und ein zweiter der Vorsprünge in der zweiten Position in die Vertiefung greift, oder
zwei Vertiefungen (25a, 25b) und einen Vorsprung (57), wobei eine erste der Vertiefungen in der ersten Position und eine zweite der Vertiefungen in der zweiten Position den Vorsprung in Eingriff nimmt.

13. Sprühstab für einen oszillierenden Regner nach einem der vorhergehenden Ansprüche, wobei mindestens zwei Verstellabschnitte (5) vorgesehen sind und ein Verstellabschnitt in der Nähe von einem ersten Ende des Sprühstabs und ein Verstellabschnitt in der Nähe von einem zweiten Ende des Sprühstabs und dazwischen ein mittlerer Bereich des Sprühstabs vorgesehen ist.

14. Sprühstab für einen oszillierenden Regner nach Anspruch 13, wobei der Sprühstab einen mittleren Metallrohrabschnitt (23) und zwei Rohrabschnitte (21, 22) aus Kunststoffmaterial umfasst, wobei ein erster der Rohrabschnitte aus Kunststoffmaterial an einem ersten Ende des Metallrohrabschnitts und ein zweiter der Rohrabschnitte aus Kunststoffmaterial an einem zweiten Ende des Metallrohrabschnitts vorgesehen ist und der Sprühstab ferner mindestens zwei Verstellabschnitte (5) umfasst, von denen ein erster an dem ersten Rohrabschnitt aus Kunststoffmaterial und ein zweiter an dem ersten Rohrabschnitt aus Kunststoffmaterial vorgesehen ist.

15. Oszillierender Regner mit einem Fuß (1), einem Sprühstab (2) nach einem der vorhergehenden Ansprüche, der für eine oszillierende Bewegung in Bezug auf den Fuß an dem Fuß (1) befestigt ist, und eine Antriebseinheit (3) zum Antreiben der oszillierenden Bewegung des Sprühstabs in Bezug auf den Fuß.

## Revendications

1. Rampe de pulvérisation pour arroseur oscillant destinée à être utilisée dans un arroseur oscillant qui comporte une base (1) sur laquelle la rampe de pulvérisation (2) est en mesure d'être montée à des fins de mouvement oscillant et une unité d'entraînement servant à entraîner le mouvement oscillant de la rampe de pulvérisation (2) par rapport à la base (1), la rampe de pulvérisation (2) comportant une entrée (4) servant à recevoir l'eau, une pluralité d'orifices de sortie (24a, 24b) et portant une partie formant dispositif de réglage (5) qui est mobile entre une première position dans laquelle la partie formant dispositif de réglage (5) masque au moins l'un des orifices de sortie (24a, 24b) contre la sortie d'eau et une deuxième position dans laquelle la partie formant dispositif de réglage (5) laisse ledit au moins l'un des orifices de sortie (24a, 24b) ouvert pour la sortie d'eau, dans laquelle la rampe de pulvérisation (2) comporte une pluralité de parties formant tube (21, 22, 23) qui sont assemblées ensemble longitudinalement bout à bout, dans laquelle la rampe de pulvérisation (2) comporte une partie formant tube métallique (23) et au moins une partie formant tube en matière plastique (21, 22), la partie formant tube métallique définissant au moins l'un de la pluralité d'orifices de sortie, ladite au moins une partie formant tube en matière plastique définissant au moins l'un de la pluralité d'orifices de sortie, et une extrémité de la partie formant tube métallique étant reliée à une extrémité de la partie formant tube en matière plastique de telle sorte qu'il y a un trajet de communication fluidique entre une partie intérieure de la partie formant tube métallique et une partie intérieure de la partie formant tube en matière plastique.

2. Rampe de pulvérisation pour arroseur oscillant selon la revendication 1, dans laquelle ladite au moins une partie formant dispositif de réglage (5) est montée sur ladite au moins une partie formant tube en matière plastique (21, 22).

3. Rampe de pulvérisation pour arroseur oscillant selon la revendication 1 ou la revendication 2, dans laquelle la rampe de pulvérisation (2) comporte une partie formant tube métallique central (23) et une paire de parties formant tube en matière plastique (21, 22), une première des parties formant tube en matière plastique étant mise en œuvre au niveau d'une première extrémité de la partie formant tube métallique et une deuxième des parties formant tube en matière plastique étant mise en œuvre au niveau d'une deuxième extrémité de la partie formant tube métallique.

4. Rampe de pulvérisation pour arroseur oscillant selon la revendication 3, dans laquelle la rampe de pulvérisation (2) comporte au moins deux parties formant dispositif de réglage (5) avec au moins une partie formant dispositif de réglage montée sur la première des parties formant tube en matière plastique et au moins une partie formant dispositif de réglage montée sur la deuxième des parties formant tube en matière plastique.

5. Rampe de pulvérisation pour arroseur oscillant selon l'une quelconque des revendications précédentes, dans laquelle la rampe de pulvérisation (2) comporte une partie formant tube (21, 22) sur laquelle la partie formant dispositif de réglage (5) est montée à des fins de mouvement de rotation autour d'un axe de la partie formant tube.

6. Rampe de pulvérisation pour arroseur oscillant selon la revendication 5, dans laquelle la partie formant dispositif de réglage (5) est maintenue à l'encontre d'un mouvement axial par rapport à la partie formant tube (21, 22).

7. Rampe de pulvérisation pour arroseur oscillant selon la revendication 5 ou la revendication 6, dans laquelle la partie formant dispositif de réglage (5) comporte une partie formant manchon mise en œuvre autour de la partie formant tube (21, 22), éventuellement dans laquelle la partie formant manchon est retenue de manière inamovible sur la partie formant tube.

8. Rampe de pulvérisation pour arroseur oscillant selon l'une quelconque des revendications précédentes, dans laquelle un joint torique d'étanchéité respectif (53) est mis en œuvre pour assurer l'étanchéité autour de chaque orifice (24a, 24b), qui est destiné à être masqué de manière sélective, entre la partie formant tube (21, 22) et la partie formant dispositif de réglage (5) quand l'orifice est masqué par la partie formant dispositif de réglage, dans laquelle éventuellement un siège de joint respectif (54) est mis en œuvre dans la partie formant tube autour de chaque orifice, qui est destiné à être masqué de manière sélective, et un joint torique d'étanchéité respectif est mis en œuvre dans chaque siège.

9. Rampe de pulvérisation pour arroseur oscillant selon l'une quelconque des revendications précédentes, dans laquelle le dispositif de réglage (5) définit une ouverture de sortie qui est alignée sur l'orifice respectif (24a, 24b) quand le dispositif de réglage est dans la deuxième position.

10. Rampe de pulvérisation pour arroseur oscillant selon l'une quelconque des revendications précédentes, dans laquelle la rampe de pulvérisation (2) comporte un moyen indicateur servant à indiquer à un utilisateur quand le dispositif de réglage est dans la première position et/ou quand le dispositif de réglage est dans la deuxième position, le moyen indicateur étant tel que le dispositif de réglage s'enclenche en position dans la première position et/ou s'enclenche en position dans la deuxième position.

11. Rampe de pulvérisation pour arroseur oscillant selon la revendication 10, dans laquelle le moyen indicateur comporte au moins une partie saillante (57) mise en œuvre sur l'une parmi la surface incurvée intérieure de la partie formant dispositif de réglage et la surface incurvée extérieure de la partie formant tube et au moins un creux (25a, 25b) mis en œuvre sur l'autre parmi la surface incurvée intérieure de la partie formant dispositif de réglage et la surface incurvée extérieure de la partie formant tube et agencé pour recevoir la partie saillante quand la partie formant dispositif de réglage est dans une position de rotation sélectionnée par rapport au tube.

12. Rampe de pulvérisation pour arroseur oscillant selon la revendication 10 ou la revendication 11, dans laquelle le moyen indicateur est agencé pour indiquer quand le dispositif de réglage (5) est dans la première position et quand le dispositif de réglage est dans la deuxième position, et le moyen indicateur comporte :
deux parties saillantes (57) et un creux (25a, 25b), dans laquelle une première des parties saillantes vient se mettre en prise avec le creux dans la première position et une deuxième des parties saillantes vient se mettre en prise avec le creux dans la deuxième position ; ou
deux creux (25a, 25b) et une partie saillante (57), dans laquelle un premier des creux vient se mettre en prise avec la partie saillante dans la première position et un deuxième des creux vient se mettre en prise avec la partie saillante dans la deuxième position.

13. Rampe de pulvérisation pour arroseur oscillant selon l'une quelconque des revendications précédentes, dans laquelle au moins deux parties formant dispositif de réglage (5) sont mises en œuvre et une partie formant dispositif de réglage est mise en œuvre vers une première extrémité de la rampe de pulvérisation et une partie formant dispositif de réglage est mise en œuvre vers une deuxième extrémité de la rampe de pulvérisation, une région centrale de la rampe de pulvérisation étant mise en œuvre entre elles.

14. Rampe de pulvérisation pour arroseur oscillant selon la revendication 13, dans laquelle la rampe de pulvérisation comporte une partie formant tube métallique central (23) et une paire de parties formant tube en matière plastique (21, 22), une première des parties formant tube en matière plastique étant mise en œuvre au niveau d'une première extrémité de la partie formant tube métallique et une deuxième des parties formant tube en matière plastique étant mise en œuvre au niveau d'une deuxième extrémité de la partie formant tube métallique et la rampe de pulvérisation comportant par ailleurs au moins deux parties formant dispositif de réglage (5), une première étant mise en œuvre sur la première partie formant tube en matière plastique et une deuxième étant mise en œuvre sur la première partie formant tube en matière plastique.

15. Arroseur oscillant comportant une base (1), une rampe de pulvérisation (2) selon l'une quelconque des revendications précédentes, montée sur la base (1) à des fins de mouvement oscillant par rapport à la base et une unité d'entraînement (3) servant à entraîner le mouvement oscillant de la rampe de pulvérisation par rapport à la base.
